# EUROPÄISCHE PATENTANMELDUNG

(11) **EP 0 727 300 A1**
(43) Veröffentlichungstag der Anmeldung: **21.08.1996**
(21) Anmeldenummer: 96102185.4
(22) Anmeldetag: 14.02.1996
(51) Int. Cl.: B29C 47/20

(54) **Verfahren und Vorrichtung zum Herstellen von Folien aus expandierbarem Kunststoff**

(30) Priorität: 14.02.1995 DE 19504897
(71) Anmelder: BASF AKTIENGESELLSCHAFT, 67056 Ludwigshafen (DE)
(72) Erfinder: Dietzen, Franz-Josef, Dr., D-67071 Ludwigshafen (DE); Ehrmann, Gerd, Dr., D-67146 Deidesheim (DE); Zettler, Hans D., D-67269 Grünstadt (DE)
(74) Vertreter: Geissler, Bernhard, Dr. jur., Dipl.-Phys.

(57) **Zusammenfassung**

Bei einem Verfahren und einer Vorrichtung zum Herstellen von Folien aus expandierbarem geschmolzenem Kunststoff mit einer Schneckenstrangpresse, die an ihrem Austrittsende mit einer Ringdüse (3) versehen ist, bildet die Austrittsachse der Schmelze mit der Mittelachse (10) der Ringdüse (3) einen Austrittswinkel (2), der größer als 45° ist. Vorzugsweise ist dieser Winkel größer als 60°. Besonders vorteilhaft ist ein Austrittswinkel von etwa 90°. Die Spaltweite (51) der Ringdüse (3) ist einstellbar und die Länge (1) des engsten Teiles des Austrittsspalts (5) der Ringdüse (3) beträgt 1 mm bis 10 mm.

## Beschreibung

Die Erfindung betrifft ein Verfahren und eine Vorrichtung zum Herstellen von Folien aus expandierbarem Kunststoff mit einer Schneckenstrangpresse, die an ihrem Austrittsende mit einer Ringdüse versehen ist. Derartige Vorrichtungen sind beispielsweise aus dem Handbuch der Kunststoff-Extrusionstechnik II, Extrusionsanlagen, Carl Hanser Verlag, München, 1986, S. 455 ff. bekannt. Weiterhin ist bekannt, die Spaltweite der Ringdüse einer derartigen Anlage veränderbar auszubilden (DE-C1-31 26 125). Bei der Herstellung von Folien aus expandierbarem Kunststoff wie Polystyrol, Polyethylen oder dergleichen, werden die in der Regel als Granulat vorliegenden Thermoplaste in eine Schneckenstrangpresse (Extruder) eingegeben, erhitzt, mit Treibmittel vermischt und durch eine Ringdüse ausgetragen. Anschließend wird die schlauchförmige Folie gekühlt. Als Treibgase sind früher vorzugsweise fluorierte Chlor-Kohlenwasserstoffe (FCKW) verwendet worden. Nachdem deren Umweltschädlichkeit festgestellt worden ist, ist versucht worden, diese durch CO₂ oder N₂ zu ersetzen. Hierbei sind insbesondere bei der Erzeugung von Folien mit Dichten deutlich unter 200 g/l Schwierigkeiten aufgetreten, die darin lagen, daß die Folien ein faltiges bzw. streifiges Aussehen hatten. Auch wenn dieser Effekt reduziert werden konnte, so ergab sich doch, daß die Foliendicke in Umfangsrichtung schwankte. Der EP 0 411 923 ist zu entnehmen (s. S. 5), daß bei der Herstellung von Polystyrol mit CO₂ als Treibgas folgende Zusammenhänge festgestellt wurden:

| **CO**_{**2**} **(%)** | **größte Dicke (mm)** | **kleinste Dicke (mm)** | **Abweichung vom Mittel (%)** |
|---|---|---|---|
| 2,3 | 3,76 | 2,48 | 20,3 |
| 2,0 | 2,66 | 2,23 | 8,8 |
| 1,3 | 2,23 | 2,26 | 0,6 |

Hieraus ist ersichtlich, daß mit steigender CO₂-Menge, wie sie zum Erreichen niedriger Dichten notwendig ist, die Folie immer welliger bzw. streifiger wird. Um die Faltenbildung zu vermindern, wird in der DE-OS-1 704 694 vorgeschlagen, vor einen üblichen Düsenkopf eine Umlenkplatte zu setzen. Durch diese Platte soll die Schmelze in radialer Richtung umgelenkt werden. Außerdem wird dort gefordert, daß der gebildete Strömungsquerschnitt nicht zunehmen darf. Dies soll ein Vorschäumen in der Düse vermeiden. Es zeigt sich jedoch, daß auch bei Einhaltung dieser Bedingung kein optimales Produkt erhalten werden kann, da durch die Querschnittsverringerung frühzeitig ein unerwünschter Druckabfall auftritt.

Der Erfindung liegt daher die Aufgabe zugrunde, eine Vorrichtung zur Herstellung von Folien aus expandierbarem Kunststoff zu schaffen, mit deren Hilfe beim Einsatz von CO₂ oder N₂ als Treibgas in einfacher und zuverlässiger Weise ein Produkt erzeugt werden kann, das eine minimale Welligkeit aufweist.

Diese Aufgabe wird dadurch gelöst, daß die Austrittsachse für die Schmelze in Bezug zur Mittelachse (10) der Ringdüse einen Austrittswinkel bildet, der größer ist als 45°. Gemäß einer besonders vorteilhaften Ausführungsform ist dieser Winkel größer als 60° und er beträgt in der optimalen Form 90°.

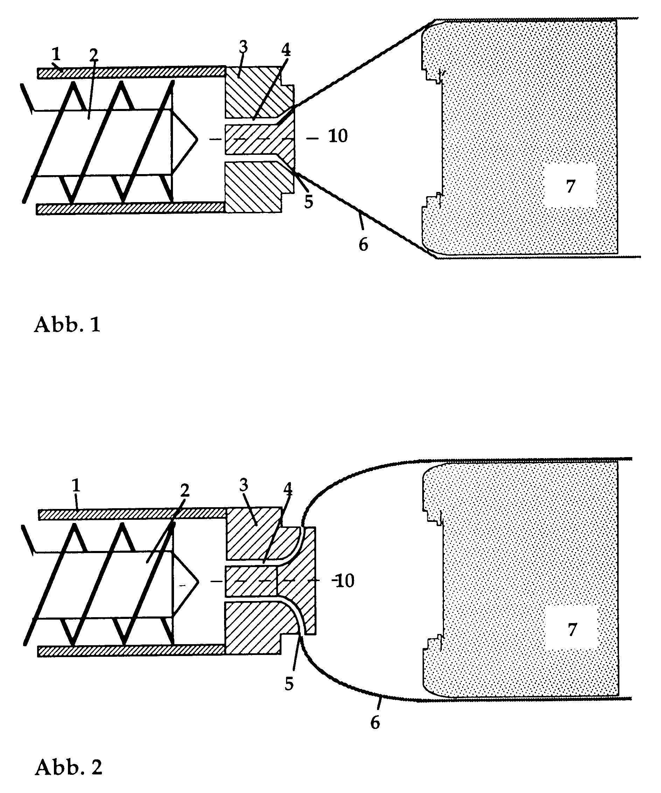

Das Auffinden dieser Bedingungen war außerordentlich überraschend und der Stand der Technik gab hierfür keinerlei Anhaltspunkte. Dort sind regelmäßig Austrittsdüsen beschrieben, bei denen der Austrittswinkel zwischen 0° und 40° liegt, wie dies schematisch in der Abbildung 1 dargestellt ist.

Die mit einem Schaumfolienwerkzeug gemäß der Erfindung hergestellten Folien, bei denen die umweltfreundlichen Treibmittel CO₂ oder N₂ eingesetzt wurden, sind auch bei geringen Dichten, das heißt großen Anteilen von CO₂ oder N₂ streifen- und faltenfrei und weisen somit eine deutlich einheitlichere Dickenverteilung auf. Die Spaltweite der Ringdüse kann in bekannter Weise einstellbar sein. Dabei ergibt sich, daß gemäß einer vorteilhaften Weiterbildung der Erfindung die Länge des engsten Teils des Austrittsspalts der Ringdüse zwischen 1 mm und 10 mm liegen kann.

Gemäß einer besonderen Ausbildung der erfindungsgemäßen Vorrichtung kann sich zwischen Schneckenstrangpresse und Ringdüse ein Fließkanal befinden, dessen Spaltweite sich erst kurz vor dem engsten Teil des Austrittsspalts unter einem Winkel zwischen 7,5° und 45° auf die engste Spaltweite der Ringdüse verengt. Diese Verengung kann auf beiden Seiten des Fließkanals oder nur auf einer Seite vorgesehen sein. Dabei kann die Spaltweite des Fließkanals vor seiner Verengung 5 bis 25 mal größer sein als die engste Spaltweite der Ringdüse.

In überraschender und nicht erwarteter Weise wurde gefunden, daß bei Einhaltung der vorgenannten Bedingungen ein Vorschäumen der treibmittelhaltigen Schmelze auch dann vermieden werden kann, wenn der Strömungsquerschnitt in Teilen des Fließkanals zunimmt. Dies gilt dann, wenn kurz vor Düsenende eine Drosselstelle vorhanden ist. Der rapide Druckabbau kurz vor Verlassen der Düse ist dabei günstig für das Schäumen mit CO₂ oder N₂. Diese teilweise vorhandene Querschnittszunahme bewirkt, daß nur ein geringer Anteil des Drucks abgebaut wird. In Verbindung mit der Drosselstelle bleibt dadurch ein hohes Druckniveau, das ein Vorschäumen verhindert, bis kurz vor den Austrittsspalt (s1) erhalten.

Weitere Einzelheiten und Vorteile der Erfindung können dem in der Zeichnung dargestellten Ausführungsbeispiel entnommen werden. Es zeigen:
- Abbildung 1: eine schematische Darstellung einer Vorrichtung nach dem Stand der Technik.
- Abbildung 2: eine schematische Darstellung der erfindungsgemäßen Vorrichtung.
- Abbildung 3: einen der Abbildung 2 entsprechenden vergrößerten Schnitt durch die erfindungsgemäße Vorrichtung.

In den Abbildungen 1 und 2 ist mit 1 eine bekannte Schneckenstrangpresse (Extruder) bezeichnet, in der eine treibmittelhaltige Schmelze erzeugt und der Ringdüse 3 zugeführt wird. Die Schmelze wird in der Regel in der Schneckenstrangpresse aus Kunststoff und Treibgas hergestellt, indem der Kunststoff, beispielsweise Polyethylen oder Polystyrol in Granulatform zugeführt und plastifiziert wird. Danach wird an anderer Stelle der Schmelze das Treibgas, hier vorzugsweise CO₂ oder N₂, zugeführt. Die treibmittelhaltige Schmelze wird dann durch einen Fließkanal 4 gefördert, der in einem Folienaustrittsspalt 5 endet. Die aus diesem austretende Folie 6, die beim Austritt abkühlt und erstarrt, wird an einer Kühlbirne 7 weiter abgekühlt und danach in bekannter Weise, ggf. nach Aufschlitzung, in Längsrichtung aufgerollt.

Bei der in Abbildung 1 dargestellten bekannten Vorrichtung beträgt der Winkel α zwischen der Schmelzaustrittsfläche und der Mittelachse (10) der Ringdüse etwa 40°. Bei der in Abbildung 2 schematisch dargestellten erfindungsgemäßen Vorrichtung beträgt dieser Winkel 90°.

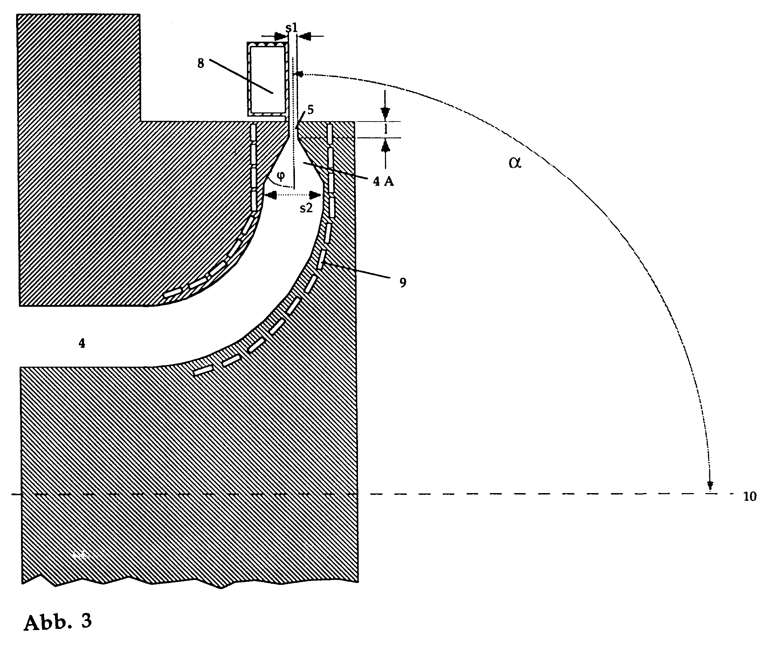

Die Einzelheiten der erfindungsgemäßen Vorrichtung sollen anhand der Abbildung 3 noch näher erläutert werden. Hier verläuft der mit der Schneckenstrangpresse (Extruder) in Verbindung stehende Fließkanal 4 im Düsenkörper 3 gekrümmt und verengt sich in dem der Düsenöffnung 5 nahen Bereich 4A von der ursprünglichen Spaltweite s2 auf die Spaltweite s1 des Düsenaustritts. Die Verengung des Fließkanals 4 erfolgt unter einem Winkel φ zwischen der Wand und der Mittelachse des engsten Düsenspalts (s1) der Düse 5. Im dargestellten Ausführungsbeispiel beträgt dieser Winkel φ etwa 30°. Die Länge des Folienaustrittsspalts l kann zwischen 1 und 10 mm liegen.

In geringfügigem Abstand vom Ende des Düsenspalts 5 ist ein Kühlring 8 angeordnet. Dabei kann es sich um einen Luftkühlring handeln, bei dem Kühlluft auf die Folie geblasen wird, oder wie in der dargestellten Ausführung um einen Flüssigkeitskühlring, der von einer Kühlflüssigkeit durchströmt wird. Die Ringdüse 3 ist mit Kanälen 9 für ein Temperiermedium versehen, mit dem die für die Extrusion einer Schaumfolie erforderliche Temperatur eingestellt wird.

## Patentansprüche

1. Verfahren zum Extrudieren von Kunststoffen mittels einer Schneckenstrangpresse, in der der Kunststoff plastifiziert und danach aus einer Ringdüse ausgetragen wird, **dadurch gekennzeichnet, daß** der plastifizierte Kunststoff unter einem Austrittswinkel (α) in Bezug auf die Mittelachse der Ringdüse austritt, der größer ist als 45°.

2. Verfahren nach Anspruch 1, dadurch gekennzeichnet, daß der plastifizierte Kunststoff unter einem Austrittswinkel (α) austritt, der größer ist als 60° und vorzugsweise etwa 90° beträgt.

3. Verfahren nach einem der vorhergehenden Verfahrensansprüche, dadurch gekennzeichnet, daß zum Herstellen von Schaumstoffen, insbesondere Schaumfolien, ein expandierbarer treibmittelhaltiger Kunststoff ausgetragen wird.

4. Verfahren nach Anspruch 3, dadurch gekennzeichnet, daß als Treibmittel CO₂ oder N₂ verwendet wird.

5. Vorrichtung zum Herstellen von Folien aus expandierbarem geschmolzenem Kunststoff mit einer Schneckenstrangpresse, die an ihrem Austrittsende mit einer Ringdüse versehen ist, dadurch gekennzeichnet, daß die Austrittsachse für die Schmelze mit der Mittelachse (10) der Ringdüse einen Austrittswinkel (α) bildet, der größer ist als 45°.

6. Vorrichtung nach Anspruch 5, dadurch gekennzeichnet, daß der Austrittswinkel (α) größer ist als 60°.

7. Vorrichtung nach Anspruch 5, dadurch gekennzeichnet, daß der Austrittswinkel (α) etwa 90° beträgt.

8. Vorrichtung nach einem der Ansprüche 5 bis 7, dadurch gekennzeichnet, daß die Spaltweite (s1) der Ringdüse (3) einstellbar ist.

9. Vorrichtung nach einem der Ansprüche 5 bis 8, dadurch gekennzeichnet, daß die Länge (l) des engsten Teiles des Austrittsspalts (5) der Ringdüse (3) 1 mm bis 10 mm beträgt.

10. Vorrichtung nach einem der Ansprüche 5 bis 9, dadurch gekennzeichnet, daß sich zwischen Schneckenstrangpresse (1) und Ringdüse (3) ein Fließkanal (4) befindet, dessen Spaltweite (s2) sich unter einem Winkel φ zwischen 7,5° und 45° auf die engste Spaltweite (s1) der Ringdüse (3) verengt.

11. Vorrichtung nach einem der Ansprüche 5 bis 10, dadurch gekennzeichnet, daß die Spaltweite (s2) des Fließkanals (4) vor seiner Verengung 5 bis 25 mal größer ist, als die engste Spaltweite (s1) der Ringdüse (3).

12. Vorrichtung nach einem der Ansprüche 5 bis 11, dadurch gekennzeichnet, daß die Spaltweite (s1) im Bereich 0,2 - 2 mm, vorzugsweise im Bereich von 0,4 - 1 mm liegt.
